(19) Europäisches Patentamt
European Patent Office
Office européen des brevets

(11) **EP 4 237 915 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **21777674.9**

(22) Anmeldetag: **13.09.2021**

(51) Internationale Patentklassifikation (IPC):
**G05B 19/042** (2006.01)

(52) Gemeinsame Patentklassifikation (CPC):
**G05B 19/0425**

(86) Internationale Anmeldenummer:
**PCT/EP2021/075127**

(87) Internationale Veröffentlichungsnummer:
**WO 2022/089825 (05.05.2022 Gazette 2022/18)**

(54) **VERFAHREN ZUM ÜBERWACHEN EINES ÜBERSCHREITENS EINER GRENZTEMPERATUR UND FELDGERÄT DER AUTOMATISIERUNGSTECHNIK**

METHOD FOR MONITORING WHETHER A LIMIT TEMPERATURE IS EXCEEDED AND AUTOMATION ENGINEERING FIELD DEVICE

PROCÉDÉ DE SURVEILLANCE D'UN DÉPASSEMENT D'UNE TEMPÉRATURE LIMITE ET APPAREIL DE TERRAIN DE LA TECHNIQUE D'AUTOMATISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2020 DE 102020128493**

(43) Veröffentlichungstag der Anmeldung:
**06.09.2023 Patentblatt 2023/36**

(73) Patentinhaber: **Endress+Hauser SE+Co. KG 79689 Maulburg (DE)**

(72) Erfinder:
• **BIRGEL, Dietmar**
  **79650 Schopfheim (DE)**
• **STRÜTT, Bernd**
  **79585 Steinen (DE)**
• **CZAJA, Silke**
  **79650 Schopfheim (DE)**

(74) Vertreter: **Endress + Hauser Group Services (Deutschland) AG+Co. KG Colmarer Straße 6 79576 Weil am Rhein (DE)**

(56) Entgegenhaltungen:
**US-A1- 2019 086 348**

**Beschreibung**

Die Erfindung betrifft ein Verfahren zum Überwachen eines während eines Messbetriebs auftretenden Überschreitens einer Grenztemperatur für ein Feldgerät der Automatisierungstechnik. Ferner betrifft die Erfindung ein Feldgerät der Automatisierungstechnik.

Feldgeräte der Automatisierungstechnik werden zur Bestimmung und/oder Überwachung von Prozessgrößen eingesetzt. Als Feldgeräte werden dabei im Prinzip alle Geräte bezeichnet, die prozessnah eingesetzt werden und prozessrelevante Informationen liefern oder verarbeiten. Dabei handelt es sich beispielsweise um Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Feldgeräte weisen oftmals eine, insbesondere zumindest zeitweise und/oder zumindest abschnittsweise mit einem Prozessmedium in Kontakt stehende Sensoreinheit auf, welche der Erzeugung eines von der Prozessgröße abhängigen Signals dient. Ferner weisen diese oftmals zumindest eine in einem Gehäuse angeordnete Elektronikeinheit mit einer Schaltungsanordnung auf, wobei die Elektronikeinheit typischerweise der Verarbeitung und/oder Weiterleitung von von der Sensoreinheit erzeugten Signalen dient.

Prozessnah eingesetzte Feldgeräte sind dabei typischerweise mitunter harschen Einsatzbedingungen ausgesetzt, welchen gegebenenfalls im Feld herrschen können. Hierzu zählen insbesondere auch in der Prozessanlage herrschende, sehr hohe Temperaturen.

Der Hersteller des Feldgeräts spezifiziert daher in der Regel, soweit möglich, eine bei einem bestimmungsgemäßen Einsatz des Feldgeräts maximal zulässige Temperatur, bei welcher ein ausfallsicheres Betreiben des Feldgeräts noch garantierbar bzw. sicherstellbar ist. Bei einem Schadensfall erweist sich ein Nachweis darüber, dass das Feldgerät einer zu hohen Temperatur ausgesetzt war, als sehr anspruchsvoll, insb. im Nachhinein.

Die US 2019/086348 A1 zeigt ein Verfahren zur Ermittlung einer Überschreitung einer Obergrenze einer kumulierten thermischen Belastung bei Feldgeräten.

Der Erfindung liegt daher die Aufgabe zugrunde, eine Lösung anzugeben, um ein Überschreiten einer Grenztemperatur in einem Messbetrieb möglichst einfach nachzuweisen.

Die Aufgabe wird gelöst durch ein Verfahren zum Überwachen eines während eines Messbetriebs auftretenden Überschreitens einer Grenztemperatur für ein Feldgerät der Automatisierungstechnik gemäß Anspruch 1.

Die Grenztemperatur ist bspw. kleiner als oder gleich eine maximal zulässige Betriebstemperatur.

Den Referenz-Widerstandswert weist das Widerstandelement bspw. anfänglich (d.h. vor dem oder bei Beginn des Messbetriebs) auf.

Der Referenz-Widerstandswert ist dabei ggf. mit einer Referenz-Temperatur verknüpft, bei welcher das Widerstandselement den Referenz-Widerstandswert aufweist. Dies bspw. für den Fall eines PTC/NTC (englisch: Postive/Negative Temperature Coefficient) temperaturabhängigen Widerstandselements.

Das Hinterlegen geschieht vor dem Messbetrieb.

Bei dem Vergleich wird bspw. eine absolute oder relative Abweichung zwischen dem Referenz-Widerstandswert und dem gemessenen Widerstandswert ermittelt. Durch das Überschreiten einer Grenztemperatur wird bspw. eine irreversible und spürbare Änderung des Widerstandswert (bspw. von zumindest 5-10%, bezogen auf den Referenz-Widerstandswert) verursacht. Falls eine zu große Abweichung vorliegt, bspw. bei Überschreiten eines vorgegeben Grenzwerts für eine tolerierbare Abweichung, wird das Überschreiten der Grenztemperatur festgestellt.

Das Detektieren des Überschreitens der Grenztemperatur wird in einem sich an den Messbetrieb anschließenden Analysebetrieb vorgenommen.

Dadurch wird das während des Messbetriebs aufgetretene Überschreiten der Grenztemperatur auch im Nachhinein nachweisbar. Der Analysebetrieb kann dabei bspw. auch prozessfern erfolgen, z.B. bei dem Hersteller des Feldgeräts, zu dem das Feldgerät bei einem Fehlerfall als Retoure zur Abwicklung eines Garantiefalls zurückgesandt wird.

In einer Ausgestaltung der Erfindung wird bei dem Vergleich ein gemessener Widerstandswert verwendet, welcher während einem Messbetriebs erfasst und abgespeichert wird und in dem Analysebetrieb ausgelesen wird.

In dem Analysebetrieb wird in dieser Ausgestaltung also auf einem in dem Messbetrieb erfassten und abgespeicherten Widerstandswert zurückgegriffen.

In einer Ausgestaltung der Erfindung wird bei dem Vergleich ein gemessener Widerstandswert verwendet, welcher während dem Analysebetrieb erfasst wird.

In dieser Ausgestaltung wird - zusätzlich oder alternativ zu dem abgespeicherten Widerstandswert- also ein in dem Analysebetrieb aktuell vorliegende Widerstandswert ermittelt, und für den Vergleich mit dem Referenz-Widerstandswert herangezogen.

Erfindungsgemäß umfasst das Verfahren die Schritte:

- Wiederkehrendes Erfassen des elektrischen Widerstandswerts des Widerstandselements während des Messbetriebs;
- Abspeichern der wiederkehrend erfassten elektrischen Widerstandswerte des Widerstandelements, jeweils zusammen mit einem dazugehörigen Zeitstempel, welcher Zeitstempel den Zeitpunkt des Erfassens des jeweiligen Widerstandswerts markiert;
- Auslesen der abgespeicherten Widerstandswerte und der dazugehörigen Zeitstempel in dem Analysebetrieb.

Somit ist bspw. anhand des Zeitstempels der Zeitpunkt des Überschreitens der Grenztemperatur während des Messbetriebs feststellbar.

Erfindungsgemäß umfasst das Verfahren den Schritt:

- Erstellen eines zeitlichen Verlaufs der im Messbetrieb erfassten Widerstandswerte, auf Basis der wiederkehrend erfassten elektrischen Widerstandswerte und der dazugehörigen Zeitstempel.

Erfindungsgemäß umfasst das Verfahren den Schritt:

- Vergleich der Widerstandswerte des zeitlichen Verlaufs mit dem Referenz-Widerstandswert, um das Überschreiten der Grenztemperatur zu detektieren, wobei bei dem Vergleich eine hinterlegte Abhängigkeit des erfassten Widerstandswerts von einer Zeitdauer des Messbetriebs berücksichtigt wird, welche Zeitdauer aus dem zeitlichen Verlauf bestimmbar ist.

Hierbei wird bei dem Betrachten der Abweichung zwischen dem Referenz-Widerstandswert und der gemessenen Widerstandswerte zusätzlich eine jeweilige Zeitdauer berücksichtigt. Bspw. wird je nach Zeitpunkt bzw. eine dazugehörige vergangene Zeitdauer ein anderer Grenzwert für eine tolerierbare Abweichung zwischen dem gemessenen Widerstandswert und dem hinterlegten Referenz-Widerstandswert verwendet. Es wird also bspw. ein dynamischer Grenzwert verwendet, der abhängig von dem Zeitstempel ist.

In einer Ausgestaltung der Erfindung umfasst das Verfahren die Schritte:

- Messen der Temperatur der Elektronikeinheit im Analysebetrieb und/oder im Messbetrieb;
- Korrektur des/der im Messbetrieb und/oder im Analysebetrieb ermittelten Widerstandswerte/s und/oder des Referenz-Widerstandswerts, wobei die Korrektur einen reversiblen Einfluss der Temperatur auf den Widerstandswert berücksichtigt,
  und wobei die Korrektur vor dem Vergleich des/der erfassten Widerstandswerte/s mit dem Referenz-Widerstandswert vorgenommen wird.

Je nach Art des Widerstandelements liegt ggf. zusätzlich zu der irreversiblen Änderung des Widerstandswert (zuordenbar zu dem Überschreiten der Grenztemperatur) eine reversible Abhängigkeit des Widerstandswerts von der Temperatur vor, bspw. für die vorstehend erwähnten PTC/NTC Widerstandelemente.

In dieser Ausgestaltung wird daher zur Erhöhung der Genauigkeit des Verfahrenes diejenige Temperatur, welche beim Erfassen des gemessenen Widerstands vorliegt, berücksichtigt. Dies bspw. indem alle gemessenen Widerstandswerte über eine PTC oder NTC-Kennlinie, welche Kennlinie - bis auf Hystereseeffekte - eine im Wesentlichen reversible Änderung des Widerstandswerts unter Temperaturänderungen beschreibt, auf eine Referenztemperatur korrigiert werden.

Je nach Art des Widerstandelements und der dazugehörigen Kennlinie ist die reversible Temperaturabhängigkeit aber ggf. auch vernachlässigbar klein, so dass eine Korrektur aller gemessenen Widerstandswerte auf eine Referenztemperatur nicht in jedem Fall wesentlich für das erfindungsgemäße Verfahren ist.

Die Referenztemperatur entspricht bspw. bevorzugt der zu dem Referenz-Widerstand gehörigen Temperatur, d.h. derjenigen Temperatur, bei der das Widerstandelement anfänglich den Referenz-Widerstand aufweist.

Ggf. umfasst das erfindungsgemäße Verfahren noch den Schritt des anfänglichen Ermittelns des Referenz-Widerstandswerts, insb. bei der Referenz-Temperatur.

Die Aufgabe wird auch gelöst durch ein Feldgerät der Automatisierungstechnik gemäß Anspruch 5.

Das Feldgerät umfasst hierzu eine Elektronikeinheit, die Elektronikeinheit aufweisend: eine Schaltungsanordnung mit einem Widerstandelement, welches Widerstandelement bei dem Messbetrieb von einem elektrischen Strom durchflossen ist, wobei die Schaltungsanordnung dazu ausgestaltet ist, einen elektrischen Widerstandswert des Widerstandelements zu ermitteln,
und wobei das Widerstandelement derart ausgebildet ist, dass es bei dem Überschreiten der Grenztemperatur eine irreversible Änderung seines Widerstandswerts erfährt.

In einer Ausgestaltung des Feldgeräts ist das Widerstandelement als eine als Überstromschutzeinrichtung dienende Sicherung ausgebildet ist.

In einer Ausgestaltung des Feldgeräts liegt der Referenz-Widerstandswert des Widerstandselements in einem Bereich von 5 mOhm (Milli-Ohm) bis 50 Ohm. Beispielsweise insbesondere in einem Bereich von 5 bis 200 mOhm (Milli-Ohm).

Dies insbesondere bei einer Referenz-Temperatur, bspw. von 20°C.

In einer Ausgestaltung des Feldgeräts weist die Schaltungsanordnung einen Mikrokontroller auf, wobei die Schaltungsanordnung dazu ausgestaltet ist, den Widerstandswert mittels einer Strom- und/oder Spannungsmessung zu messen und an den Mikrokontroller zu übermitteln.

Der Mikrokontroller weist bspw. einen Speicherbaustein auf, in dem der/die in dem Messbetrieb erfassten Widerstandswerte hinterlegt werden, und in welchem ggf. auch der Referenz-Widerstandswert hinterlegt ist. Andernfalls bzw. zusätzlich ist es selbstverständlich möglich, eine mit dem Mikrokontroller mittels einer Kommunikationsverbindung verbundene, weitere Speichereinheit, bereitzustellen- bspw. in einer übergeordneten Einheit - zum Abspeichern des Referenz-Widerstandswerts und/oder des/der erfassten Widerstandswerte.

Erfindungsgemäß weist das Widerstandselement zwei über eine intermetallische Zone in unmittelbaren Kontakt stehende Metalle oder Metalllegierungen auf.

Untersuchungen der Anmelderin haben gezeigt, dass das Überschreiten einer Grenztemperatur zu einem spürbaren Wachstum der intermetallischen Zone führt. Diese Vergrößerung der intermetallischen Zone stellt eine irreversible Änderung der Materialeigenschaften des Widerstandselements dar, welche mit einer gleichermaßen irreversiblen Änderung seines Widerstandswerts einhergeht. Dadurch ist die irreversible Änderung des Widerstandswerts dem Überschreiten der Grenztemperatur zuordenbar.

Intermetallische Zonen zwischen Metallen oder Metalllegierungen treten immer dann auf, wenn zwei unterschiedliche Metall(-legierungen) miteinander insb. stoffschlüssig, verbunden sind und dabei in unmittelbaren Kontakt miteinander stehen, etwa durch Löt- und/oder Beschichtungsprozesse.

In einer Ausgestaltung des Feldgeräts weist ein erstes Metall oder eine erste Metalllegierung Kupfer auf und ein zweites Metall oder eine zweite Metalllegierung Zinn. In diesem Fall liegt also insb. eine intermetallische Kupfer-Zinn Phase vor.

Insbesondere weist das Widerstandselement einen zumindest an einer Oberfläche Kupfer aufweisenden Draht auf, der mit einer Zinn aufweisenden Beschichtung versehen ist (bspw. ein verzinnter Kupferdraht).

Insbesondere weist der Draht einen Querschnitt kleiner als 100 $\mu$m (Mikrometer) auf.

In einer Ausgestaltung des Feldgeräts weist die Schaltungsanordnung ein Temperaturmesselement auf, das dazu ausgestaltet ist, die Temperatur der Elektronikeinheit zu messen und an den Mikrokontroller zu übermitteln. Im einfachsten Fall ist das Temperaturmesselement selbst als Baustein in die Schaltungsanordnung der Elektronikeinheit integriert.

Die Erfindung umfasst ferner ein Messsystem, aufweisend ein erfindungsgemäßes Feldgerät und eine übergeordnete Einheit, wobei das Feldgerät an die übergeordnete Einheit angeschlossenen ist.

Die Erfindung sowie weitere vorteilhafte Ausgestaltungen werden nachfolgend anhand von Ausführungsbeispielen näher erläutert. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Es zeigen:

Fig. 1a-c: Detailansicht einer Ausgestaltung einer Elektronikeinheit eines erfindungsgemäßen Feldgeräts;

Fig. 2: Ein Schaltbild in einer Ausgestaltung der Erfindung;

Fig. 3: Ein Flussdiagramm für eine Ausgestaltung der erfindungsgemäßen Verfahrens;

Fig. 4: Ein zeitlicher Verlauf der erfassten Widerstandswerte in einer Ausgestaltung des erfindungsgemäßen Verfahrens;

Fig. 5: Eine Ausgestaltung eines erfindungsgemäßen Feldgeräts als Teil eines Messsystems.

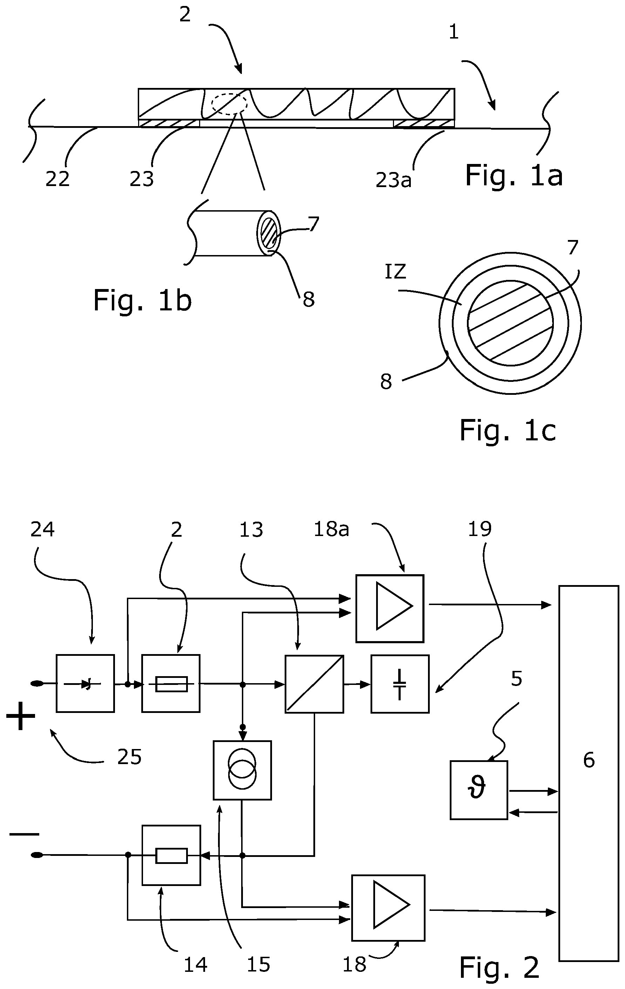

Fig. 1a zeigt, in einer Schnittansicht ein Detail einer Schaltungsanordnung 1 einer Elektronikeinheit 10 in einer Ausgestaltung eines erfindungsgemäßen Feldgeräts 11. Hierbei ist das Widerstandselement 2 gezeigt, welches mit dafür vorgesehenen Anschlüssen auf Kontaktflächen 23,23a auf einer Oberfläche einer Leiterplatte 22 aufgelötet ist. Das Widerstandselement 2 weist einen anfänglichen Referenz-Widerstandswert RW auf, bspw. von 30 Milli-Ohm, welcher in dem erfindungsgemäßen Verfahren bekannt und in einer Speichereinheit 16 (vgl. Fig. 2) hinterlegt wird. Dieser liegt insb. auch bei einer Referenz-Temperatur RT, bspw. einer Raumtemperatur wie etwa 20°C, vor.

Das Widerstandselement 2 wird in der Schaltungsanordnung 1 als eine Sicherung (Überstromschutzeinrichtung) eingesetzt. Das Widerstandselement 2 umfasst hier einen in Windungen um einen elektrisch isolierenden Kern gewickelten Draht mit einer Draht-Dicke von ca. 20 $\mu$m. Der Draht weist als erstes Metall 7 Kupfer auf. Er ist mit einer Beschichtung, aufweisend Zinn als zweites Metall 8, beschichtet. Dies ist in dem mit Detail in Fig. 1b nochmals näher gezeigt, in einer perspektivischen Ansicht eines Draht-Abschnitts, bzw. in Fig. 1c in einer Aufsicht auf die Querschnittsfläche des Drahts. In Fig.1c ist ferner einer intermetallische Zone IZ gezeigt, über welche das erste Metall 7 und das zweite Metall 8 in unmittelbaren Kontakt miteinander stehen. Derartige intermetallische Zonen IZ liegen i.d.R. auch in der stoffschlüssigen Lotverbindungen vor, bspw. zwischen den Anschlüssen des Widerstandselements 2 und den Kontaktflächen 23,23a vor.

Im Allgemeinen wachsen intermetallische Zonen IZ (auch: Phasen) bei konstanter Temperatur mit einer näherungsweise konstanten Wachstumsrate gemäß dem folgenden Zusammenhang an:

$$\text{Wachstumsrate in µm/h (Mikrometer pro Stunde)} = A*\exp [\ (T- T0)/C],$$

wobei T0, C und A entsprechende Parameter sind. Je nach Art des ersten Metalls 7 und des zweiten Metalls 8 bzw. je nach Ausgestaltung der intermetallische Zone IZ, wird unter hohen Temperaturen, bspw. oberhalb der Grenztemperatur GT, ein deutlich spürbares Wachstum der intermetallischen Zone IZ verursacht. Dies, da die Temperatur gemäß dem obigen Zusammenhang exponentiell in die Wachstumsrate der intermetallische Zonen IZ eingeht. Es wurde in Untersuchungen der Anmelderin nachgewiesen, dass für das Beispiel der gezeigten Kupfer-Zinn intermetallischen Zone IZ deren Dicke bei Überschreiten der Grenztemperatur GT derart anwächst, dass durch diese irreversible Materialveränderung auch eine messbare, irreversible des Widerstandswerts WW verursacht wird.

Die dem Überschreiten der Grenztemperatur GT zuordenbare Änderung des Widerstandswerts WW ist deutlich spürbar, d.h. es wird durch das Überschreiten einer Grenztemperatur GT von bspw. ca. 250 °C eine Änderung des Widerstandswert WW von zumindest 5-10% (bezogen auf den Referenz-Widerstandswert RW) beobachtet.

Dieser Umstand wird erfindungsgemäß nun ausgenutzt, indem mittels geeigneter Ausgestaltung der Schaltungsanordnung 1 ein Widerstandswert WW gemessen und erfasst wird, und anhand des gemessenen Widerstandswerts WW und eines Vergleichs mit dem Referenz-Widerstandswert RW ein Rückschluss auf das Überschreiten der Grenztemperatur GT in dem Messbetrieb MB geschlossen wird. Dies, indem bspw. der Widerstandswert WW in einem Messbetrieb MB wiederkehrend erfasst und abgespeichert wird. Die abgespeicherten Widerstandswerte WW werden in diesem Fall dann anschließend in einem Analysebetrieb AB mit dem Referenz-Widerstandswert RW verglichen.

Aufgrund der irreversiblen Änderung des Widerstandswert WW in dem Messbetrieb MB kann - alternativ oder zusätzlich - der Widerstandswert WW auch in dem Analysebetrieb AB gemessen und mit dem Referenz-Widerstandswert RW verglichen werden.

Gegebenenfalls ist hier die messbare, irreversible Änderung des Widerstandswert WW auch nur dadurch feststellbar, indem erst in dem Analysebetrieb AB der Widerstandswert WW ermittelt wird. In diesem Fall muss bevorzugt während des Messbetrieb MB der Widerstandswert WW nicht speziell mitgeschrieben werden.

Das Erfassen des Widerstandswert WW (unabhängig vom jeweiligen Messbetrieb MB oder Analysebetrieb AB) wird bspw. mittels eines in Fig. 2 als Schaltbild näher dargestellten Teils der Schaltungsanordnung 1 nachgewiesen. Dieser Teil umfasst das Widerstandselement 2, welches bei Überschreiten der Grenztemperatur GT die irreversible Änderung seines Widerstandswerts WW erfährt.

Beispielsweise wird über einen oberen Pfad in dem Schaltbild in Fig. 2 die über dem Widerstandselement 2 abgefallene Spannung mittels eines Spannungs-Operationsverstärkers 18 erfasst und an einen Mikrokontroller 6 übermittelt und der Widerstandswert WW anhand R=U/I bestimmt.

Andernfalls ist es auch möglich, mittels einer Stromsenke 15 und einem Messwiderstand 14 über einen Strom-Operationsverstärker 18 den Strom zu bestimmen und daraus den Widerstandswert WW zu ermitteln und an den Mikrokontroller 6 zu übermitteln.

Eingangs des Schaltbilds, direkt anschließend an eine Spannungsversorgung 25, ist zudem noch eine Messdiode 24 angeordnet, welche dem Verpolschutz dient.

Über einen Spannungsregler 13 und einen Kondensator 19 wird zudem eine Versorgungsspannung bereitgestellt. Der Kondensator 19 dient insb. dazu, eine Restwelligkeit einer Ausgangsspannung zu filtern und daher diese zu glätten.

Die Schaltungsanordnung 1 umfasst auch ein darin als Baustein integriertes Temperaturmesselement 5, welches zusätzlich noch die Temperatur in der Elektronikeinheit 10 misst. Dadurch kann der erfasste Widerstandswert WW immer noch einer jeweiligen Messtemperatur zugeordnet werden. Dadurch ist - unter gleichzeitiger Kenntnis einer PTC/NTC Kennlinie des Widerstandselement 2 - der gemessene Widerstandswert WW auf einen korrigierten Widerstandswert WW bei einer Referenz-Temperatur RT korrigierbar.

Das Temperaturmesselement 5 dient bspw. auch noch dazu, die anfängliche Referenz-Temperatur RT, bei welcher der Referenz-Widerstandswert RW vorliegt zu ermitteln. Das Temperaturmesselement 5 weist in der Regel einen nach oben beschränkten Messbereich auf, so dass das Überschreiten der Grenztemperatur GT nicht in jedem Fall mit dem Temperaturmesselement 5 selbst feststellbar ist. Es wird daher bspw. dazu verwendet, die anfängliche Referenz-Temperatur RT und die in dem Analysebetrieb AB aktuell vorliegende Temperatur zu ermitteln. Wird der Referenz-Widerstandswert RW auf dieselbe Referenz-Temperatur RT korrigiert (oder: wurde bereits bei der Referenz-Temperatur RT ermittelt), wird eine im Wesentlichen reversible Temperaturabhängigkeit des Widerstandelement 2 kompensiert. Dadurch wird letztendlich die Genauigkeit des Vergleichs zwischen dem gemessenen Widerstandswert WW und dem Referenz-Widerstandswert RW erhöht, und damit letztendlich auch die Zuverlässigkeit des erfindungsgemäßen Verfahrens zum Überwachen des Überschreitens der Grenztemperatur GT.

Das Überschreiten der bei typischerweise hohen Temperaturen liegenden Grenztemperatur GT ist somit anhand der irreversiblen Änderung des - ggf. temperaturkorrigierten - Widerstandswerts WW des Widerstandselements 2 in dem Analysebetrieb AB feststellbar.

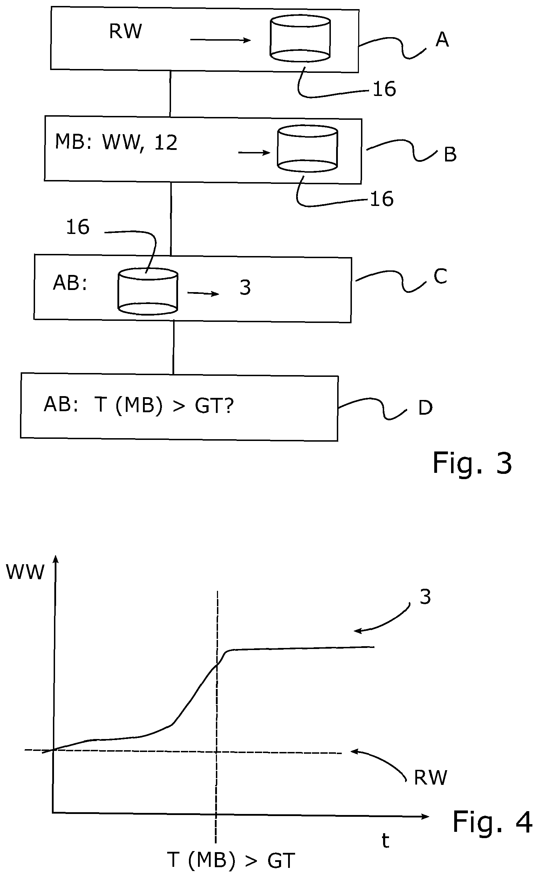

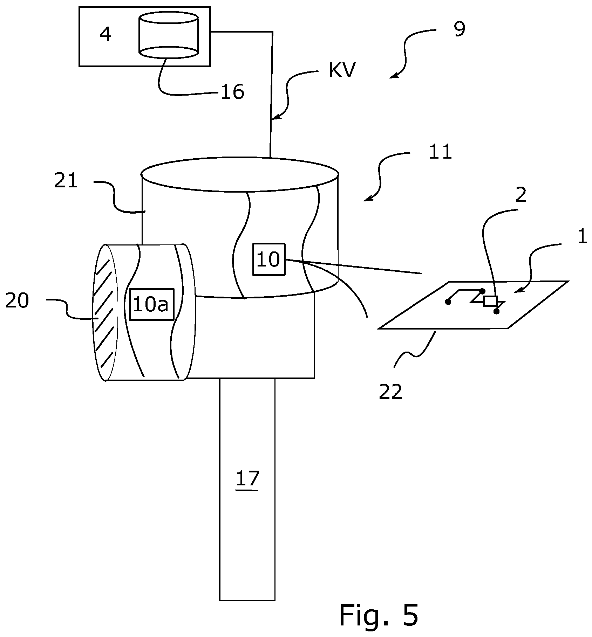

In Fig. 3 sind die Schritte des erfindungsgemäßen Verfahrens in einer Ausgestaltung mittels eines Flussdiagramms näher dargestellt. In einem ersten Schritt A) wird, bevorzugt vor Beginn des Messbetriebs MB, ein Referenz-Widerstandswert RW für das in Fig. 1 und 2 bereits gezeigte Widerstandselement 2 hinterlegt, bevorzugt in einer dem Mikrokontroller 6 oder einer übergeordneten Einheit 4 (vgl. Fig. 5) zugeordneten Speichereinheit 16.

Anschließend wird in einem Schritt B) während des Messbetriebs MB des Feldgeräts 11, bevorzugt wiederkehrend, der Widerstandswert WW gemessen. Auch der im Messbetrieb MB mitgeschriebene Widerstandswert WW wird in der Speichereinheit 16 hinterlegt, zusammen mit einem Zeitpunkt, zu welchem Zeitpunkt der Widerstandswert WW erfasst wurde, nämlich in Form eines Zeitstempels 12.

In einem Schritt C), welcher bevorzugt in einem sich an dem Messbetrieb MB anschließenden Analysebetrieb AB durchgeführt wird, wird anhand der gespeicherten Widerstandswerte WW und der dazugehörigen Zeitstempel 12 ein zeitlicher Verlauf 3 der wiederkehrend erfassten Widerstandswert WW erstellt.

Dieser ist in Fig. 4 nochmals näher dargestellt, in der die im Messbetrieb MB erfassten Widerstandswert WW auf der y-Achse über den dazugehörigen Zeitpunkten bzw. Zeitstempel 12 auf der x-Achse aufgetragen sind, der Übersichtlichkeit halber in Form eines kontinuierlichen zeitlichen Verlaufs 3.

In dem Analysebetrieb AB wird dann in einem Schritt D) der zeitliche Verlauf 3 daraufhin untersucht, ob die Grenztemperatur GT in dem Messbetrieb MB überschritten wurde. Anhand einer spürbaren Änderung (hier: Zunahme) des Widerstandswerts WW ist das Überschreiten der Grenztemperatur GT und der dazugehörige Zeitpunkt während des Messbetriebs MB auch im Nachhinein feststellbar. Dies daran, dass (Vgl. Fig. 4) der Widerstandswert WW in einem zu großen Maße von dem Referenz-Widerstandswert RW abweicht.

Wie bereits vorstehend im Zusammenhang mit der Wachstumsrate der intermetallischen Zonen erwähnt, ist auch bei Temperaturen unterhalb der Grenztemperatur GT eine allmähliche Änderung des Widerstandswerts WW zu erwarten, bedingt durch das Wachstum der intermetallische Zonen IZ.

Die Abweichung des (ggf. auf eine Referenz-Temperatur RT korrigierten) Widerstandswerts WW von dem Referenz-Widerstandswert RW (betrachtet bei derselben Referenz-Temperatur RT) ist daher im Allgemeinen eine Funktion sowohl einer vergangenen Zeitspanne ab einer anfänglichen Ermittlung des Referenz-Widerstandswert RW, als auch der während dieser Zeitspanne durch das Widerstandselement 2 erfahrenen Temperatur. Ggf. wird dies bei der Analyse in dem Analysebetrieb AB berücksichtigt, indem - abhängig von der jeweiligen Zeitdauer - eine maximal zu erwartende Änderung des Widerstandswerts WW abgeschätzt wird, welche im Rahmen von Temperaturen unterhalb der Grenztemperatur GT auftritt.

Fig. 5 zeigt ein Messsystem 9, umfassend ein Feldgerät 11 der Automatisierungstechnik, dass an eine übergeordnete Einheit 4 mittels einer Kommunikationsverbindung KV angeschlossen ist.

Bei der übergeordneten Einheit 4 handelt es sich bspw. um eine übergeordnete Steuerungseinheit, bspw. ein Rechner in einem Prozessleitsystem oder um eine speicherprogrammierte Steuerungseinheit (SPS). Die übergeordnete Einheit 4 umfasst die Speichereinheit 16, in welcher die während des Messbetrieb MB erfassten Widerstandswerte WW abgespeichert werden. Auch der Referenz-Widerstandswert RW ist dort hinterlegt. Wie vorstehend erwähnt kann die Speichereinheit 16 ansonsten auch Teil der Elektronikeinheit 10 und damit des elektronischen Geräts 11 selbst sein, bspw. indem sei als ein Baustein des Mikrokontrollers 6 integriert ist. Letzteres ist von Vorteil, wenn der Messbetrieb MB und der Analysebetrieb AB nicht in derselben Prozessanlage durchgeführt werden.

Sind alle im Messbetrieb MB gemessenen Widerstandswerte WW in einem Speicherbaustein des Mikrokontrollers 6 selbst gespeichert, kann der Hersteller des Feldgerät 11 im Falle einer Retoure diesen auslesen und daraus das Überschreiten der Grenztemperatur GT in dem Messbetrieb MB überwachen.

Die übergeordnete Einheit 4 dient bspw. der Erstellung und Auswertung des zeitlichen Verlaufs 3 in dem Analysebetrieb AB.

Bei der Kommunikationsverbindung KV, handelt es sich bspw. um eine drahtgebundene Kommunikationsverbindung KV, bspw. um eine analoge Messübertragungsstrecke, insb. nach dem 4-20mA Standard, oder um einen drahtgebundenen Feldbus der Automatisierungstechnik, bspw. Foundation Fieldbus, Profibus PA, Profibus DP, HART, CANBus. Es kann sich aber auch um eine Kommunikationsverbindung eines modernen industriellen Kommunikationsnetzwerks, bspw. einen "Industrial Ethernet"-Feldbus, insbesondere Profinet, HART-IP oder Ethernet/IP oder eines aus dem Kommunikationsbereich bekanntes Kommunikationsnetzwerk, bspw. Ethernet nach dem TCP/IP-Protokoll, handeln.

Für den Fall, dass die Kommunikationsverbindung KV drahtlos ist, kann es sich zum Beispiel um ein Bluetooth, ZigBee-, WLAN-, GSM-, LTE-, UMTS-Kommunikationsnetzwerk oder aber auch eine drahtlose Version eines Feldbusses, insbesondere 802.15.4 basierte Standards wie WirelessHART handeln.

Das Feldgerät 11 weist eine, insbesondere zumindest zeitweise und/oder zumindest abschnittsweise mit einem Prozessmedium in Kontakt stehende Sensoreinheit 17 auf, welche der Erzeugung eines die Prozessgröße repräsentierenden, bspw. elektrischen und/oder elektronischen, Messsignals, dient. Die in einem Transmittergehäuse 21 des Feldgeräts 11 angeordnete Elektronikeinheit 10 dient der Verarbeitung und/oder Weiterleitung von der von der Sensoreinheit 17 erzeugten Messsignale. Die Elektronikeinheit 10 umfasst eine Leiterplatte 22 mit der Schaltungsanordnung 1, die in einem Pfad das Widerstandselement 2 aufweist, mittels dessen das Überschreiten der Grenztemperatur, bspw. in einem Messbetrieb, feststellbar ist. Die Schaltungsanordnung 1 ist bspw. gemäß dem in Fig. 2 gezeigten Schaltbild ausgebildet.

Vorteilhaft ist für das Feldgerät 11 das Überschreiten der Grenztemperatur GT auch im Nachhinein, d.h. im Analysebetrieb AB feststellbar. Dies entweder durch Auslesen der in der Speichereinheit 16 gespeicherten und im Messbetrieb MB erfassten Widerstandswerte WW oder auch durch erneutes Erfassen des Widerstandswerts WW des Widerstandselement 2 im Analysebetrieb AB.

In der in Fig. 5 gezeigten Ausgestaltung weist das Feldgerät 11 eine weitere, als Anzeige-/Eingabeeinheit 20 dienende, Elektronikeinheit 10a auf, mit einem darauf montierten (Touch-)Display. Für den Fall, dass das Feldgerät 11 mehrere Elektronikeinheiten 10,10a, ... aufweist, ist es selbstverständlich möglich, dass das Widerstandselement 2, mittels dessen das Überschreiten der Grenztemperatur GT feststellbar ist, in einer der oder beiden Elektronikeinheiten 10, 10a eingesetzt wird.

**Bezugszeichen und Symbole**

| | |
|---|---|
| 1 | Schaltungsanordnung |
| 2 | Widerstandselement |
| 3 | zeitlicher Verlauf |
| 4 | übergeordnete Einheit |
| 5 | Temperaturmesselement |
| 6 | Mikrokontroller |
| 7 | erste Metall(legierung) |
| 8 | zweite Metall(legierung) |
| 9 | Messsystem |
| 10, 10a | Elektronikeinheit |
| 11 | Feldgerät |
| 12 | Zeitstempel |
| 13 | Spannungsregler |
| 14 | Messwiderstand |
| 15 | Stromsenke |
| 16 | Speichereinheit |
| 17 | Sensoreinheit |
| 18,18a | Verstärker |
| 19 | Kondensator |
| 20 | Anzeige-/Eingabeeinheit |
| 21 | Transmittergehäuse |
| 22 | Leiterplatte |
| 23,23a | Kontaktflächen |
| 24 | Messdiode |
| 25 | Spannungsversorgung |
| MB | Messbetrieb |
| AB | Analysebetrieb |
| GT | Grenztemperatur |
| WW | Widerstandswert |
| RW | Referenz-Widerstandswert |

T        Temperatur
IZ       intermetallische Zone
KV     Kommunikationsverbindung

**Patentansprüche**

**1.** Verfahren zum Überwachen eines während eines Messbetriebs (MB) auftretenden Überschreitens einer Grenztemperatur (GT) für ein Feldgerät (11) der Automatisierungstechnik,
wobei das Feldgerät (11) eine Elektronikeinheit (10) umfasst, die Elektronikeinheit (10) aufweisend:

eine Schaltungsanordnung (1) mit einem Widerstandelement (2), welches Widerstandelement (2) bei dem Messbetrieb (MB) von einem elektrischen Strom durchflossen ist und zwei über eine intermetallische Zone (IZ) in unmittelbaren Kontakt stehende Metalle oder Metalllegierungen aufweist, wobei die Schaltungsanordnung (1) dazu ausgestaltet ist, einen elektrischen Widerstandswert (WW) des Widerstandselements (2) zu ermitteln, und wobei das Widerstandelement (2) derart ausgebildet ist, dass es bei dem Überschreiten der Grenztemperatur (GT) eine irreversible Änderung seines Widerstandswerts erfährt (WW),
das Verfahren umfassend die Schritte:

- Hinterlegen eines Referenz-Widerstandswerts (RW) des Widerstandselements (2);
- Wiederkehrendes Erfassen des elektrischen Widerstandswerts (WW) des Widerstandselements (2) während des Messbetriebs (MB);
- Abspeichern der wiederkehrend erfassten elektrischen Widerstandswerte (WW) des Widerstandselements, jeweils zusammen mit einem dazugehörigen Zeitstempel (12), welcher Zeitstempel (12) den Zeitpunkt des Erfassens des jeweiligen Widerstandswerts (WW) markiert;
- Erstellen eines zeitlichen Verlaufs (3) der im Messbetrieb (MB) erfassten Widerstandswerte (WW), auf Basis der wiederkehrend erfassten elektrischen Widerstandswerte (WW) und der dazugehörigen Zeitstempel (12), und Detektieren des Überschreitens der Grenztemperatur (GT), wobei das Detektieren des Überschreitens der Grenztemperatur (GT) in einem sich an den Messbetrieb (MB) anschließenden Analysebetrieb (AB) vorgenommen wird,

wobei der Analysebetrieb umfasst:

- Auslesen der abgespeicherten Widerstandswerte (WW) und der dazugehörigen Zeitstempel (12) und
- Detektieren des Überschreitens der Grenztemperatur (GT), falls eine dem Überschreiten der Grenztemperatur (GT) zuordenbare irreversible Änderung des Widerstandswert (WW) des Widerstandselements (2) festgestellt wird, mittels eines Vergleichs des zeitlichen Verlaufs (3) mit dem Referenz-Widerstandswert (RW), um das Überschreiten der Grenztemperatur (GT) zu detektieren, wobei bei dem Vergleich eine hinterlegte Abhängigkeit des erfassten Widerstandswerts (WW) von einer Zeitdauer berücksichtigt wird, welche Zeitdauer aus dem zeitlichen Verlauf (3) bestimmbar ist.

**2.** Verfahren nach Anspruch 1,
wobei bei dem Vergleich ein gemessener Widerstandswert (WW) verwendet wird, welcher während des Messbetriebs (MB) erfasst und abgespeichert wird und welcher in dem Analysebetrieb ausgelesen (AB) wird.

**3.** Verfahren nach zumindest einem der vorherigen Ansprüche,
wobei bei dem Vergleich ein gemessener Widerstandswert (WW) verwendet wird, welcher während des Analysebetriebs (AB) erfasst wird.

**4.** Verfahren nach zumindest einem der vorherigen Ansprüche,
umfassend die Schritte:

- Messen der Temperatur (T) der Elektronikeinheit (10) im Analysebetrieb (AB) und/oder im Messbetrieb (MB);
- Korrektur des/der im Messbetrieb (MB) und/oder im Analysebetrieb (AB) ermittelten Widerstandswerte/s (WW) und/oder des Referenz-Widerstandswerts (RW), wobei die Korrektur einen reversiblen Einfluss der Temperatur (T) auf den Widerstandswert (WW) berücksichtigt,
und wobei die Korrektur vor dem Vergleich des/der erfassten Widerstandswerte/s (WW) mit dem Referenz-Widerstandswert (RW) vorgenommen wird.

5. Feldgerät (11) der Automatisierungstechnik, wobei das Feldgerät (11) dazu ausgestaltet ist, das Verfahren zum Überwachen eines während eines Messbetriebs (MB) auftretenden Überschreitens der Grenztemperatur (GT) nach zumindest einem der vorherigen Ansprüche auszuführen, allein oder in Kombination mit einer übergeordneten Einheit (4),

wobei das Feldgerät (11) eine Elektronikeinheit (10) umfasst, die Elektronikeinheit (10) aufweisend: eine Schaltungsanordnung (1) mit einem Widerstandelement (2), welches Widerstandelement bei dem Messbetrieb (MB) von einem elektrischen Strom durchflossen ist und zwei über eine intermetallische Zone (IZ) in unmittelbaren Kontakt stehende Metalle oder Metalllegierungen aufweist, wobei die Schaltungsanordnung (1) dazu ausgestaltet ist, einen elektrischen Widerstandswert (WW) des Widerstandselements (2) zu ermitteln, und wobei das Widerstandselement (2) derart ausgebildet ist, dass es bei dem Überschreiten der Grenztemperatur (GT) eine irreversible Änderung seines Widerstandswerts (WW) erfährt.

6. Feldgerät nach Anspruch 5, wobei das Widerstandselement (2) als eine als Überstromschutzeinrichtung dienende Sicherung ausgebildet ist.

7. Feldgerät nach Anspruch 5 oder 6, wobei der Referenz-Widerstandswert (RW) des Widerstandselements (2) in einem Bereich von 5 mOhm (Milli-Ohm) bis 50 Ohm liegt.

8. Feldgerät nach zumindest einem der Ansprüche 5 bis 7,
wobei die Schaltungsanordnung (1) einen Mikrokontroller (6) aufweist, und wobei die Schaltungsanordnung (1) dazu ausgestaltet ist, den Widerstandswert (WW) mittels einer Strom- und/oder Spannungsmessung zu messen und an den Mikrokontroller (6) zu übermitteln.

9. Feldgerät nach zumindest einem der Ansprüche 5 bis 8,
wobei ein erstes Metall (7) der beiden Metalle oder eine erste Metalllegierung (7a) der beiden Metalllegierungen Kupfer aufweist und wobei ein zweites Metall (8) der beiden Metalle oder eine zweite Metalllegierung (8b) der beiden Metalllegierungen Zinn aufweist.

10. Feldgerät nach zumindest einem der Ansprüche 5 bis 9,
wobei die Schaltungsanordnung (1) ein Temperaturmesselement (5) aufweist, das dazu ausgestaltet ist, die Temperatur (T) der Elektronikeinheit (10) zu messen und an den Mikrokontroller (6) zu übermitteln.

11. Messsystem (9) aufweisend ein Feldgerät nach zumindest einem der Ansprüche 5 bis 10 und eine übergeordnete Einheit (4), wobei das Feldgerät (11) an die übergeordnete Einheit (4) mittels einer Kommunikationsverbindung (KV) angeschlossenen ist.

**Claims**

1. Method for monitoring the exceeding of a limit temperature (GT) for a field device (11) in automation technology during a measurement operation (MB),
wherein the field device (11) comprises an electronic unit (10), the electronic unit (10) comprising:

a circuit arrangement (1) with a resistive element (2), which resistive element (2) is traversed by an electric current during the measurement operation (MB) and has two metals or metal alloys in direct contact via an intermetallic zone (IZ), wherein the circuit arrangement (1) is designed to determine an electrical resistance value (WW) of the resistive element (2),
and wherein the resistive element (2) is designed such that it undergoes an irreversible change in its resistance value (WW) when the limit temperature (GT) is exceeded,
the method comprising the steps:

- Storing a reference resistance value (RW) of the resistance element (2);
- Repeatedly detecting the electrical resistance value (WW) of the resistance element (2) during measurement operation (MB);
- Storing the repeatedly detected electrical resistance values (WW) of the resistance element, each together with an associated time stamp (12), which time stamp (12) marks the time at which the respective resistance value (WW) was detected;

- Creation of a time curve (3) of the resistance values (WW) recorded during the measurement operation (MB), based on the repeatedly recorded electrical resistance values (WW) and the associated time stamps (12), and

detecting when the limit temperature (GT) is exceeded, wherein the detection of when the limit temperature (GT) is exceeded is performed in an analysis mode (AB) following the measurement mode (MB),
wherein the analysis mode comprises:

- reading out the stored resistance values (WW) and the associated time stamps (12), and
- detecting when the limit temperature (GT) has been exceeded if an irreversible change in the resistance value (WW) of the resistance element (2) that can be attributed to the limit temperature (GT) being exceeded is detected, by means of a comparison of the time curve (3) with the reference resistance value (RW) in order to detect the exceeding of the limit temperature (GT), wherein the comparison takes into account a stored dependence of the detected resistance value (WW) on a time duration, which time duration can be determined from the time curve (3).

2. Method according to claim 1,
   wherein a measured resistance value (WW) is used in the comparison, which is detected and stored during the measurement operation (MB) and which is read out (AB) in the analysis operation.

3. Method according to at least one of the previous claims,
   wherein a measured resistance value (WW) is used in the comparison, which is recorded during the analysis operation (AB).

4. Method according to at least one of the previous claims,

   comprising the steps:

   - measuring the temperature (T) of the electronic unit (10) in analysis mode (AB) and/or in measurement mode (MB);
   - correcting the resistance value(s) (WW) determined in measurement mode (MB) and/or in analysis mode (AB) and/or the reference resistance value (RW), wherein the correction takes into account a reversible influence of the temperature (T) on the resistance value (WW),

   and wherein the correction is performed before comparing the detected resistance value(s) (WW) with the reference resistance value (RW).

5. Field device (11) for automation technology, wherein the field device (11) is designed to carry out the method for monitoring an exceedance of the limit temperature (GT) occurring during a measurement operation (MB) according to at least one of the previous claims, alone or in combination with a higher-level unit (4),

   wherein the field device (11) comprises an electronic unit (10), the electronic unit (10) comprising: a circuit arrangement (1) with a resistance element (2), which resistor element is traversed by an electric current during the measurement operation (MB) and has two metals or metal alloys in direct contact via an intermetallic zone (IZ), wherein the circuit arrangement (1) is designed to determine an electrical resistance value (WW) of the resistor element (2),
   and wherein the resistive element (2) is designed such that it undergoes an irreversible change in its resistance value (WW) when the limit temperature (GT) is exceeded.

6. Field device according to claim 5, wherein the resistive element (2) is designed as a fuse serving as an overcurrent protection device.

7. Field device according to claim 5 or 6, wherein the reference resistance value (RW) of the resistance element (2) is in a range from 5 mOhm (milli-ohms) to 50 ohms.

8. Field device according to at least one of claims 5 to 7,
   wherein the circuit arrangement (1) has a microcontroller (6), and wherein the circuit arrangement (1) is designed to measure the resistance value (WW) by means of a current and/or voltage measurement and to transmit it to the microcontroller (6).

9. Field device according to at least one of claims 5 to 8,
wherein a first metal (7) of the two metals or a first metal alloy (7a) of the two metal alloys comprises copper, and wherein a second metal (8) of the two metals or a second metal alloy (8b) of the two metal alloys comprises tin.

10. Field device according to at least one of claims 5 to 9,
wherein the circuit arrangement (1) comprises a temperature measuring element (5) which is designed to measure the temperature (T) of the electronic unit (10) and transmit it to the microcontroller (6).

11. Measuring system (9) comprising a field device according to at least one of claims 5 to 10 and a higher-level unit (4), wherein the field device (11) is connected to the higher-level unit (4) by means of a communication link (KV).

**Revendications**

1. Procédé pour surveiller le dépassement d'une température limite (GT) pour un appareil de terrain (11) de la technique d'automatisation, qui se produit pendant une opération de mesure (MB),
l'appareil de terrain (11) comprenant une unité électronique (10), l'unité électronique (10) présentant :

   un circuit (1) avec un élément résistif (2), lequel élément résistif (2) est traversé par un courant électrique pendant l'opération de mesure (MB) et comprend deux métaux ou alliages métalliques en contact direct via une zone intermétallique (IZ), le circuit (1) est conçu pour déterminer une valeur de résistance électrique (WW) de l'élément résistif (2),
   et l'élément résistif (2) étant conçu de telle sorte qu'il subit une modification irréversible de sa valeur de résistance (WW) lorsque la température limite (GT) est dépassée,
   le procédé comprenant les étapes suivantes :

      - enregistrement d'une valeur de résistance de référence (RW) de l'élément résistif (2) ;
      - détection répétée de la valeur de résistance électrique (WW) de l'élément résistif (2) pendant le fonctionnement de mesure (MB) ;
      - Enregistrement des valeurs de résistance électrique (WW) détectées de manière répétée de l'élément résistif, chacune avec un horodatage correspondant (12), lequel horodatage (12) marque le moment de la détection de la valeur de résistance respective (WW) ;
      - Création d'un historique temporel (3) des valeurs de résistance (WW) enregistrées pendant le fonctionnement de mesure (MB), sur la base des valeurs de résistance électrique (WW) enregistrées de manière récurrente et des horodatages correspondants (12), et

   détection du dépassement de la température limite (GT), la détection du dépassement de la température limite (GT) étant effectuée dans un mode d'analyse (AB) suivant le mode de mesure (MB),
   le mode d'analyse comprenant :

      - la lecture des valeurs de résistance (WW) enregistrées et des horodatages (12) correspondants, et
      - la détection du dépassement de la température limite (GT) si une modification irréversible de la valeur de résistance (WW) de l'élément résistif (2) pouvant être attribuée au dépassement de la température limite (GT) est constatée, au moyen d'une comparaison de l'évolution dans le temps (3) avec la valeur de résistance de référence (RW) afin de détecter le dépassement de la température limite (GT), la comparaison tenant compte d'une dépendance enregistrée de la valeur de résistance enregistrée (WW) par rapport à une durée, laquelle durée peut être déterminée à partir de l'évolution dans le temps (3).

2. Procédé selon la revendication 1,
dans lequel une valeur de résistance mesurée (WW) est utilisée pour la comparaison, laquelle valeur est détectée et enregistrée pendant le fonctionnement de mesure (MB) et est lue (AB) pendant le fonctionnement d'analyse.

3. Procédé selon au moins l'une des revendications précédentes,
dans lequel une valeur de résistance mesurée (WW) est utilisée pour la comparaison, laquelle est enregistrée pendant le fonctionnement d'analyse (AB).

**4.** Procédé selon au moins l'une des revendications précédentes,

comprenant les étapes suivantes :

- la mesure de la température (T) de l'unité électronique (10) pendant le fonctionnement d'analyse (AB) et/ou pendant le fonctionnement de mesure (MB) ;
- la correction de la ou des valeurs de résistance (WW) déterminées pendant le fonctionnement de mesure (MB) et/ou pendant le fonctionnement d'analyse (AB) et/ou de la valeur de résistance de référence (RW), la correction tenant compte d'une influence réversible de la température (T) sur la valeur de résistance (WW),

et la correction étant effectuée avant la comparaison de la ou des valeurs de résistance (WW) enregistrées avec la valeur de résistance de référence (RW).

**5.** Appareil de terrain (11) de la technique d'automatisation, l'appareil de terrain (11) étant conçu pour exécuter le procédé de surveillance d'un dépassement de la température limite (GT) survenant pendant un mode de mesure (MB) selon au moins l'une des revendications précédentes, seul ou en combinaison avec une unité supérieure (4),

l'appareil de terrain (11) comprenant une unité électronique (10), l'unité électronique (10) comportant : un circuit (1) avec un élément résistif (2), cet élément résistif étant traversé par un courant électrique pendant l'opération de mesure (MB) et comportant deux métaux ou alliages métalliques en contact direct via une zone intermétallique (IZ), le circuit (1) étant conçu pour déterminer une valeur de résistance électrique (WW) de l'élément résistif (2), et l'élément résistif (2) étant conçu de telle sorte qu'il subit une modification irréversible de sa valeur de résistance (WW) lorsque la température limite (GT) est dépassée.

**6.** Appareil de terrain selon la revendication 5, l'élément résistif (2) étant conçu comme un fusible servant de dispositif de protection contre les surintensités.

**7.** Appareil de terrain selon la revendication 5 ou 6, la valeur de résistance de référence (RW) de l'élément résistif (2) étant comprise dans une plage de 5 mOhm (milli-ohms) à 50 ohms.

**8.** Appareil de terrain selon au moins l'une des revendications 5 à 7, dans lequel le circuit (1) comprend un microcontrôleur (6) et dans lequel le circuit (1) est conçu pour mesurer la valeur de résistance (WW) au moyen d'une mesure de courant et/ou de tension et pour la transmettre au microcontrôleur (6).

**9.** Appareil de terrain selon au moins l'une des revendications 5 à 8, dans lequel un premier métal (7) des deux métaux ou un premier alliage métallique (7a) des deux alliages métalliques comprend du cuivre et dans lequel un deuxième métal (8) des deux métaux ou un deuxième alliage métallique (8b) des deux alliages métalliques comprend de l'étain.

**10.** Appareil de terrain selon au moins l'une des revendications 5 à 9, dans lequel le circuit (1) comprend un élément de mesure de température (5) qui est conçu pour mesurer la température (T) de l'unité électronique (10) et la transmettre au microcontrôleur (6).

**11.** Système de mesure (9) comprenant un appareil de terrain selon au moins l'une des revendications 5 à 10 et une unité supérieure (4), l'appareil de terrain (11) étant connecté à l'unité supérieure (4) au moyen d'une liaison de communication (KV).

Fig. 1a

Fig. 1b

Fig. 1c

Fig. 2

RW → ⬡ 16 ⟶ A

MB: WW, 12 → ⬡ 16 ⟶ B

16 ⟶ ⬡
AB: ⬡ → 3 ⟶ C

AB: T (MB) > GT? ⟶ D

## Fig. 3

WW

3

RW

T (MB) > GT

t

## Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019086348 A1